# EUROPÄISCHE PATENTSCHRIFT

(11) **EP 1 104 719 B1**
(45) Veröffentlichungstag und Bekanntmachung des Hinweises auf die Patenterteilung: **07.07.2010**
(21) Anmeldenummer: 00124346.8
(22) Anmeldetag: 17.11.2000
(51) Int. Cl.: B60R 16/02, H02J 1/14

(54) **Stromversorgung für Fahrzeuge**
Power supply for vehicles
Alimentation pour véhicules

(30) Priorität: 02.12.1999 DE 19958098
(43) Veröffentlichungstag der Anmeldung: 06.06.2001
(60) Teilanmeldung: 04028733.6
(73) Patentinhaber: TRW Automotive Electronics & Components GmbH, 78315 Radolfzell (DE)
(72) Erfinder: Cornelius, Peter, 77815 Bühl (DE)
(74) Vertreter: Prinz & Partner

(56) Entgegenhaltungen:
- EP-A- 0 751 046
- WO-A-98/33680

## Beschreibung

Die Erfindung betrifft eine elektrische Stromversorgung für Fahrzeuge.

In Fahrzeugen wird die elektrische Energie für den Betrieb der verschiedenen elektrischen Verbraucher einem Akkumulator entnommen, der bei Betrieb der Brennkraftmaschine durch einen Generator aufgeladen wird. Einer der Akkumulator-Pole wird unmittelbar mit der Fahrzeugmasse verbunden. Der andere Akkumulator-Pol, im allgemeinen der Pluspol, wird bei modernen Fahrzeugen über einen Verteiler mit mehreren Ausgängen und integrierten Sicherungen zu den verschiedenen Verbrauchern geführt.

WO 98/33680 offenbart eine elektrische Stromversorgung für Fahrzeuge gemäß dem Oberbegriff des Anspruchs 1. Die jeweiligen Schaltereinrichtungen sind dem zugeordneten Stromverbraucher angepaßt, wobei Niederstromverbraucher zu Gruppen zusammengefaßt werden und Hochstrom-Verbraucher eine individuelle Schaltereinrichtung erhalten. Die Akkumulatorspannung wird dadurch stabil gehalten, daß eine weniger kritische Last abgeschaltet werden kann, wenn eine kritische Last zuviel Strom verbraucht.

Durch die Erfindung wird eine elektrische Stromversorgung für Fahrzeuge mit den Merkmalen des Anspruchs 1 geschaffen, die eine bedarfsgerechte Nutzung der vom Akkumulator bereitgestellten Energiereserve ermöglicht. Gemäß der Erfindung ist zwischen dem Eingang für einen Akkumulator-Pol und wenigstens einem der Ausgänge des Verteilers ein Halbleiter-Schalter angeordnet, der durch eine elektronische Steuereinheit angesteuert wird; die Steuereinheit weist eine Eingangsschnittstelle für Sensor-Signale auf, die für Betriebsparameter repräsentativ sind. Die Steuereinheit hat somit eine aktive Kontrolle über den oder die an den mit einem Halbleiter-Schalter versehenen Ausgang angeschlossenen Verbraucher. Diese Kontrolle kann in einer bedarfsgerechten Ein- oder Abschaltung bestehen, oder auch in einer Modulation, insbesondere durch Pulsdauermodulation.

Wenigstens derjenige Ausgang, an den die im wesentlichen durch Glühbirnen gebildete Fahrzeugbeleuchtung angeschlossen ist, wird durch Pulsdauermodulation auf einen effektiven Spannungswert geregelt, für den die Glühbirnen ausgelegt sind. Die vom Generator bereitgestellte Ladespannung für den Akkumulator muß nun nicht mehr mit Rücksicht auf die Lebensdauer der Glühbirnen auf einen Wert begrenzt werden, der deutlich niedriger ist als die optimale Ladespannung unter bestimmten Betriebsbedingungen.

Weiterhin ist bei der bevorzugten Ausführungsform vorgesehen, durch permanente Überwachung der Lade- und Entladeströme und Integration der gemessenen Stromwerte eine für den Ladezustand des Akkumulators repräsentative Größe zu erzeugen. In Abhängigkeit vom Ladezustand des Akkumulators können dann die verschiedenen Verbraucher nach einem Prioritätsschema aus dem Akkumulator versorgt werden. Dieses Konzept ermöglicht bei niedrigem Ladestand des Akkumulators den Erhalt wesentlicher Funktionen über eine verlängerte Zeitspanne, so daß ein Fahrzeug beispielsweise beim Ausfall des Generators länger betriebsbereit bleibt.

Weitere Merkmale und Vorteile der Erfindung ergeben sich aus der folgenden Beschreibung und aus den Zeichnungen, auf die Bezug genommen wird. In den Zeichnungen zeigen:
Figur 1 ein Blockdiagramm der elektrischen Stromversorgung;
Figur 2 eine schematische Darstellung einer Einrichtung zur Strommessung mittels magnetoresistiven Elementen;
Figur 3 ein Diagramm, das den Ladestrom zeigt.

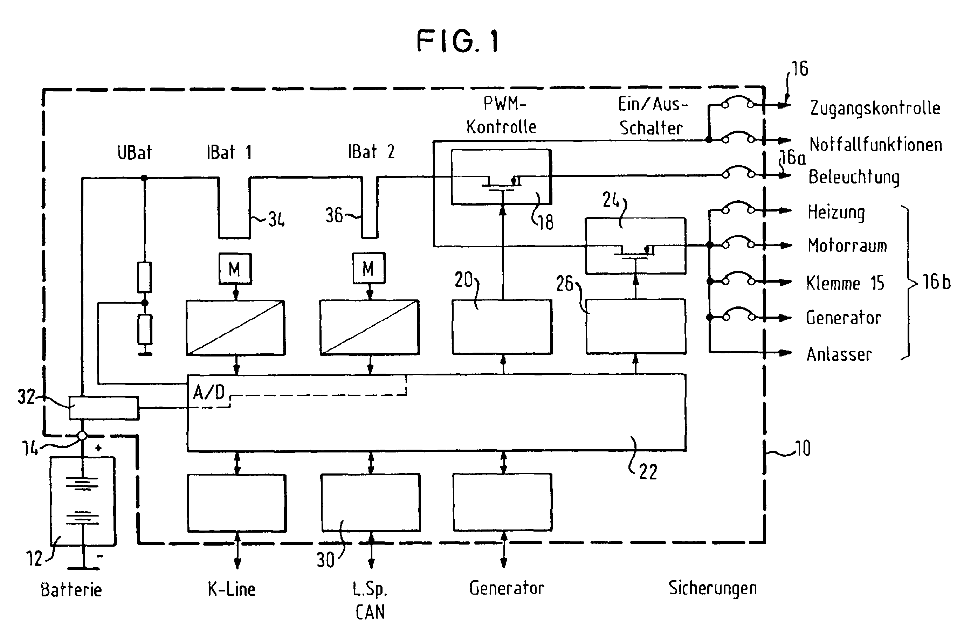

Die Stromversorgung wird in einem Gehäuse 10 aufgebaut, das auf den Akkumulator 12 aufgesetzt wird, vorzugsweise unmittelbar neben dem Pluspol. Die Stromversorgung hat einen Eingang 14, der mit dem Pluspol des Akkumulators unmittelbar verbunden ist. Ferner hat die Stromversorgung eine Reihe von Ausgängen 16, an die die verschiedenen Verbraucher angeschlossen werden. Bei der in Figur 1 gezeigten Ausführungsform ist allen Ausgängen 16, mit Ausnahme des für den Anlasser vorgesehenen Ausganges, eine Sicherung vorgeschaltet. Der mit 16a bezeichnete Ausgang ist zum Anschließen der Fahrzeugbeleuchtung vorgesehen, die überwiegend aus Glühbirnen besteht. Diesem Ausgang 16a ist ein Halbleiter-Schalter 18 vorgeschaltet. Dieser Halbleiterschalter 18 wird mittels einer Treiberschaltung 20 von einer digitalen Steuereinheit 22 angesteuert. Die Ansteuerung erfolgt in der Weise, daß durch Pulsdauermodulation am Ausgang 16a eine Betriebsspannung bereitgestellt wird, deren Effektivwert auf die vorgesehene Betriebsspannung der in der Fahrzeugbeleuchtung verwendeten Glühbirnen begrenzt ist.

Der in Figur 1 mit 16b bezeichneten Gruppe von Ausgängen ist ein Halbleiter-Schalter 24 vorgeschaltet. Dieser Halbleiter-Schalter 24 wird über eine Treiberschaltung 26 durch die digitale Steuereinheit 22 angesteuert. Da an einen der Ausgänge 16b der Anlasser angeschlossen wird, ist der Halbleiter-Schalter 24 durch Parallelschaltung mehrerer Halbleiterelemente sehr niederohmig ausgelegt. Durch acht parallelgeschaltete Halbleiter-Schalter vom Typ MOSFET ist ein Widerstand von weniger als 0,5 mΩ bei 25°C erreichbar.

Eingangsseitig hat die digitale Steuereinheit 22 mehrere Schnittstellen zum Anlegen von analogen und digitalen Signalen, die für verschiedene Betriebsparameter repräsentativ sind. Dazu gehört auch eine Schnittstelle 30, an die ein bidirektionales Bussystem (CAN) angeschlossen wird.

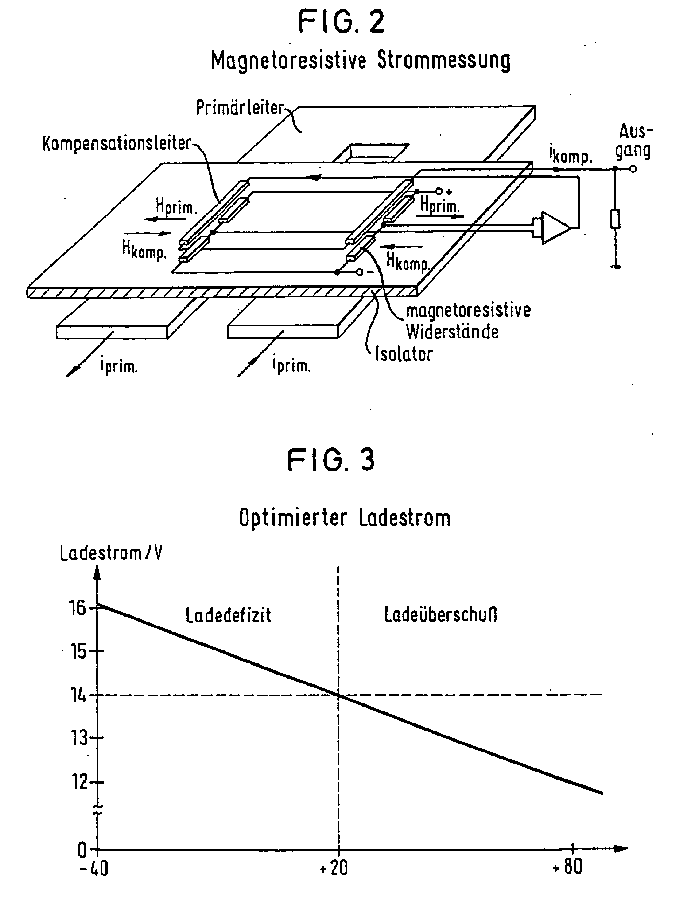

Für die Optimierung der Ladespannung müssen zwei Größen berücksichtigt werden, nämlich die Temperatur im Inneren des Akkumulators und dessen Ladezustand. Die Temperatur am Akkumulator unmittelbar neben dem Pluspol ist hinreichend repräsentativ für die Innentemperatur. Bei der erfindungsgemäßen Stromversorgung ist ein Temperaturfühler 32 in Form eines NTC-Widerstandes unmittelbar neben dem Pluspol des Akkumulators angeordnet und mit einem A/D-Eingang der digitalen Steuereinheit 22 verbunden. Der Ladezustand des Akkumulators wird durch permanente Überwachung der Lade- und Entladeströme ermittelt, indem die Meßwerte integriert werden. Die Messung erfolgt vorzugsweise in zwei aneinander anschließenden Kanälen, die eine Bandbreite von 0,1 A bis 800 A (80 dB) abdecken. Dazu sind zwei Meßschleifen 34, 36 vorgesehen, an denen magnetoresistive Widerstände wie in Figur 2 gezeigt angeordnet sind.

Figur 3 zeigt die Optimierung des Ladestroms, die ohne Rücksicht auf durch Glühbirnen der Fahrzeugbeleuchtung oder dergleichen gegebene Beschränkungen erfolgen kann.

Die mit der erfindungsgemäßen Stromversorgung zur Verfügung gestellten Leistungsmerkmale können in zwei Gruppen eingeteilt werden:
1. Akkumulator-Management
   - Ladezustand durch Stromintegration
   - optionale Anzeige des Ladezustandes
   - optimierte Ladespannung (Temperatur, Ladezustand, Batterielebensdauer)
   - Spannungsregelung für alle Glühfadenbirnen, vorzugsweise Pulsdauermodulation bei etwa 90 Hz.
   Durch diese erste Gruppe von Leistungsmerkmalen ergibt sich eine zuverlässige Batterieladung über alle Temperaturbereiche. Insbesondere läßt sich die Ladungsreserve bei tiefen Temperaturen vergrößern. Schließlich ergibt sich eine verlängerte Lebensdauer sowohl der Glühfadenbirnen der Fahrzeugbeleuchtung als auch des Akkumulators selbst.
2. Verbraucher-Management
   - prioritätsgesteuerte Verbrauchsreduzierung anhand der über ein Bussystem (CAN) abgefragten Betriebsparameter
   - zwei Betriebsmodi, Zündung Ein und Zündung Aus
   - Anpassung der Leerlaufdrehzahl (Anhebung bei niedrigem Ladezustand)
   - Begrenzung der Anlasser-Betätigungszeit (Vermeidung von Mißbrauch).
   Durch diese Leistungsmerkmale werden die verfügbaren Ladungsreserven gesteigert.

## Patentansprüche

1. Elektrische Stromversorgung für Fahrzeuge, mit einem Akkumulator (12) und einem Verteiler, der einen Eingang (14) für einen Akkumulator-Pol und mehrere Ausgänge (16) aufweist, an denen die Akkumulator-Spannung für verschiedene Verbraucher bereitgestellt wird, wobei zwischen dem Eingang für einen Akkumulator-Pol und wenigstens einem der Ausgänge ein HalbleiterSchalter (18) angeordnet ist, der durch eine elektronische Steuereinheit (22) angesteuert wird, und die Steuereinheit (22) eine Eingangsschnittstelle für Sensor-Signale aufweist, die für Betriebsparameter repräsentativ sind, **dadurch gekennzeichnet, daß** einer der Ausgänge (16a) durch Ansteuerung des Halbleiter-Schalters (18) so pulsdauermoduliert ist, daß er auf eine maximale Effektivspannung geregelt wird und die Ladespannung für den Akkumulator (12) durch einen Laderegler ohne Rücksicht auf die Spannungsfestigkeit eines oder mehrerer der an den pulsdauermodulierten Ausgang angeschlossenen Verbraucher auf einen im Hinblick auf Kriterien wie Ladungsreserve, Betriebstemperatur, Ladezustand und Lebensdauer optimierten Wert eingestellt wird.

2. Stromversorgung nach Anspruch 1, **dadurch gekennzeichnet, daß** an den pulsdauermodulierten Ausgang (16a) Glühfadenbirnen der Fahrzeugbeleuchtung angeschlossen sind.

3. Stromversorgung nach Anspruch 2, **dadurch gekennzeichnet, daß** die Pulsdauermodulation mit einer Frequenz über 50 Hz, vorzugsweise etwa 90 Hz, erfolgt.

4. Stromversorgung nach einem der Ansprüche 1 bis 3, **gekennzeichnet durch** eine **durch** die Steuereinheit (22) kontrollierte selektive Reduzierung des Stromverbrauchs einzelner oder mehrerer Stromverbraucher in Abhängigkeit von Betriebsparametern.

5. Stromversorgung nach Anspruch 4, **dadurch gekennzeichnet, daß** einer der berücksichtigten Betriebsparameter der Zustand des Zündschalters ist.

6. Stromversorgung nach einem der vorstehenden Ansprüche, **dadurch gekennzeichnet, daß** durch permanente Messung der Verbraucher- und Ladeströme und Integration der Strom-Meßwerte eine den Ladezustand anzeigende Kenngröße erzeugt wird.

7. Stromversorgung nach Anspruch 6, **dadurch gekennzeichnet, daß** die Strommessung unmittelbar hinter dem Eingang für den Akkumulator-Pol in mehreren aufeinanderfolgenden Strombereichen erfolgt.

8. Stromversorgung nach Anspruch 6 oder 7, **dadurch gekennzeichnet, daß** die Strommessung mittels magnetoresistiven Elementen erfolgt.

9. Stromversorgung nach einem der Ansprüche 6 bis 8, **gekennzeichnet durch** eine Anzeigeeinrichtung für den Ladezustand des Akkumulators.

10. Stromversorgung nach einem der Ansprüche 1 bis 9, **dadurch gekennzeichnet, daß** an die Eingangsschnittstelle ein vorzugsweise bidirektionales Bussystem (CAN) anschließbar ist.

11. Stromversorgung nach einem der Ansprüche 6 bis 10, **dadurch gekennzeichnet, daß** bei einem niedrigen Ladezustand die Leerlaufdrehzahl der den Generator und das Fahrzeug antreibenden Brennkraftmaschine erhöht wird.

12. Stromversorgung nach einem der Ansprüche 4 bis 11, **gekennzeichnet durch** eine von der Steuereinheit kontrollierte Begrenzung der Betätigungsdauer des Anlassers.

## Claims

1. An automotive electric power supply including a rechargeable battery (12) and a distributor comprising an input (14) for one battery terminal and a plurality of outputs (16) furnishing the battery voltage for a plurality of different consumers, a semiconductor switch (18) being arranged between the input for one battery terminal and at least one of the outputs and being driven by an electronic controller (22), and the controller (22) having an input interface for sensor signals representative of operating parameters, **characterized in that** one of the outputs (16a) is pulse width modulated by controlling the semiconductor switch (18) such that it is regulated to a maximum rms voltage and the charging voltage for the rechargeable battery (12) is adjusted by a charge controller to a value optimized for criteria such as standby charge level, operating temperature, charge condition and life, irrespective of the withstand voltage of one or more of the consumers connected to the pulse width modulated output.

2. The power supply as set forth in claim 1, **characterized in that** incandescent bulbs of the vehicle lighting system are connected to the pulse width modulated output (16a).

3. The power supply as set forth in claim 2, **characterized in that** the pulse width modulation has a frequency exceeding 50 Hz, preferably in the range of 90 Hz.

4. The power supply as set forth in any of claims 1 to 3, **characterized by** a selective reduction, controlled by the controller (22), in the current consumption of one or more current consumers as a function of operating parameters.

5. The power supply as set forth in claim 4, **characterized in that** one of the operating parameters taken into account is the condition of the ignition switch.

6. The power supply as set forth in any of the preceding claims, **characterized in that** by permanently sensing the consumer and charging currents and integrating the current values sensed, a characteristic indicating the charge condition is generated.

7. The power supply as set forth in claim 6, **characterized in that** current sensing is done directly behind the input for the battery terminal in a plurality of successive current ranges.

8. The power supply as set forth in claim 6 or 7, **characterized in that** sensing the current is done by means of magnetoresistive elements.

9. The power supply as set forth in any of claims 6 to 8, **characterized by** a means for indicating the charge condition of the rechargeable battery.

10. The power supply as set forth in any of claims 1 to 9, **characterized in that** a preferably bidirectional bus system (CAN) is connectable to the input interface.

11. The power supply as set forth in any of claims 6 to 10, **characterized in that** when the charge condition is low the idling speed of the internal combustion engine driving the alternator and the vehicle is raised.

12. The power supply as set forth in any of claims 4 to 11, **characterized by** the ON duration of the starter being limited as controlled by the controller.

## Revendications

1. Alimentation en courant électrique pour véhicules, comportant un accumulateur (12) et un distributeur, qui comporte une entrée (14) pour un pôle d'accumulateur et plusieurs sorties (16) auxquelles la tension d'accumulateur est mise à la disposition de plusieurs consommateurs, un interrupteur à semi-conducteurs (18) qui est commandé par une unité de commande électronique (22) étant agencé entre l'entrée pour un pôle d'accumulateur et au moins l'une des sorties, et l'unité de commande (22) comportant une interface d'entrée pour des signaux de capteurs qui sont représentatifs de paramètres de fonctionnement, **caractérisée en ce que** l'une des sorties (16a) est modulée en largeur d'impulsion par la commande de l'interrupteur à semi-conducteurs (18) de façon à ce qu'elle soit réglée sur une tension efficace maximale et la tension de charge pour l'accumulateur (12) soit réglée par un régulateur de charge, sans prise en compte de la rigidité diélectrique d'un ou de plusieurs des consommateurs raccordés à la sortie modulée en largeur d'impulsion, sur une valeur optimisée quant à des critères comme la réserve de charge, la température de fonctionnement, l'état de charge et la durée de vie.

2. Alimentation en courant selon la revendication 1, **caractérisée en ce que** des ampoules à incandescence de l'éclairage du véhicule sont raccordées à la sortie (16a) modulée en largeur d'impulsion.

3. Alimentation en courant selon la revendication 2, **caractérisée en ce que** la modulation de largeur d'impulsion s'effectue avec une fréquence supérieure à 50 Hz, de préférence de 90 Hz environ.

4. Alimentation en courant selon l'une des revendications 1 à 3, **caractérisée par** une réduction sélective, contrôlée par l'unité de commande (22), de la consommation de courant de consommateurs de courant individuels ou de plusieurs consommateurs de courant en fonction de paramètres de fonctionnement.

5. Alimentation en courant selon la revendication 4, **caractérisée en ce que** l'un des paramètres de fonctionnement pris en compte est l'état de l'interrupteur d'allumage.

6. Alimentation en courant selon l'une des revendications précédentes, **caractérisée en ce qu'**une grandeur caractéristique indiquant l'état de charge est produite grâce à une mesure permanente des courants de consommateurs et de charge et grâce à une intégration des valeurs mesurées de courants.

7. Alimentation en courant selon la revendication 6, **caractérisée en ce que** la mesure de courant s'effectue immédiatement après l'entrée pour le pôle d'accumulateur dans plusieurs zones de courant consécutives.

8. Alimentation en courant selon la revendication 6 ou 7, **caractérisée en ce que** la mesure de courant s'effectue au moyen d'éléments magnétorésistifs.

9. Alimentation en courant selon l'une des revendications 6 à 8, **caractérisée par** un dispositif d'affichage pour l'état de charge de l'accumulateur.

10. Alimentation en courant selon l'une des revendications 1 à 9, **caractérisée en ce qu'**un système de bus de préférence bidirectionnel (CAN) peut être raccordé à l'interface d'entrée.

11. Alimentation en courant selon l'une des revendications 6 à 10, **caractérisée en ce que**, pour un état de charge faible, la vitesse à vide du moteur à combustion interne entraînant le générateur et le véhicule est augmentée.

12. Alimentation en courant selon l'une des revendications 4 à 11, **caractérisée par** une limitation, contrôlée par l'unité de commande, de la durée d'actionnement du démarreur.
